# EUROPÄISCHE PATENTSCHRIFT

(11) **EP 3 006 907 B1**
(45) Veröffentlichungstag und Bekanntmachung des Hinweises auf die Patenterteilung: **08.02.2017**
(21) Anmeldenummer: 15186451.9
(22) Anmeldetag: 23.09.2015
(51) Int. Cl.: G01G 19/56, A47L 5/00

(54) **BODENBEARBEITUNGSROBOTER MIT PERSONENWAAGE**
SOIL PROCESSING ROBOT WITH SCALES FOR WEIGHING PERSONS
ROBOT DE TRAITEMENT DE SOL DOTÉ D'UNE BALANCE POUR PERSONNES

(30) Priorität: 08.10.2014 DE 102014114611
(43) Veröffentlichungstag der Anmeldung: 13.04.2016
(73) Patentinhaber: Vorwerk & Co. Interholding GmbH, 42275 Wuppertal (DE)
(72) Erfinder: Plachetka, Robert, 42389 Wuppertal (DE)
(74) Vertreter: Cohausz & Florack

(56) Entgegenhaltungen:
- US-A- 5 995 884
- US-A1- 2014 289 992

## Beschreibung

Die Erfindung betrifft einen Bodenbearbeitungsroboter mit einem selbsttätig verfahrbaren Bodenbearbeitungsgerät, das ein Gehäuse aufweist. Die Erfindung betriff auch ein System zur Bodenbearbeitung mit einem ein selbsttätig verfahrbares Bodenbearbeitungsgerät, ein Gehäuse und einen Akkumulator aufweisenden Bodenbearbeitungsroboter und mit einer Basisstation zumindest zum Aufladen des Akkumulators des Bodenbearbeitungsgerätes, wobei das Gehäuse des Bodenbearbeitungsgerätes auf der Oberseite eine Standfläche für ein Tragen einer Person aufweist und wobei die Basisstation eine Basisplatte zur Aufnahme aller Auflagepunkte des Bodenbearbeitungsgerätes aufweist.

Unter einem Bodenbearbeitungsgerät wird im Rahmen der vorliegenden Erfindung ein Saug- und/oder Kehrgerät verstanden. Hierzu verfügen derartige Reinigungsgeräte über elektrisch betriebene Saug-Gebläseeinheiten und/oder elektromotorisch angetriebene Bürsten und/oder Borstenwalzen. Ebenso kann unter einem Bodenbearbeitungsgerät ein Rasenmäher verstanden werden. Gleichwohl wird im Folgenden die Erfindung hauptsächlich in Bezug auf ein Bodenreinigungsgerät im Haushaltsbereich beschrieben.

Die Stromversorgung des selbsttätig verfahrbaren Bodenbearbeitungsroboters erfolgt über Akkumulatoren. Zum Aufladen der Akkumulatoren und darüber hinaus ggf. auch zur Entsorgung des in einem geräteinternen Behälter gesammelten Schmutzes oder Abfalls, ist dem Bodenbearbeitungsgerät eine stationäre Basisstation zugeordnet, die an das Haushaltsstromnetz angeschlossen ist.

Das bekannte Bodenbearbeitungsgerät findet die Basisstation selbsttätig auf, bspw. mit Hilfe einer Funk- und/oder Lichtsignalführung oder auch einer Funkkommunikation zwischen Basisstation und Bodenbearbeitungsgerät. Die Aufforderung zum Anfahren der Basisstation kann selbsttätig erfolgen, so bspw. durch Funkkommunikation zwischen Basisstation und Bodenbearbeitungsgerät. Ebenso kann das Bodenbearbeitungsgerät selber in Abhängigkeit vom Füllgrad des geräteseitigen Schmutzbehälters und/oder vom Ladezustand der Akkumulatoren die Basisstation anfahren. Des Weiteren kann das Bodenbearbeitungsgerät nach Abschluss einer durchzuführenden Arbeit, bspw. einer Reinigung eines vorgegebenen Fußbodenbereiches, die Basisstation selbsttätig anfahren.

Im Ruhezustand befindet sich das selbsttätig verfahrbare Bodenbearbeitungsgerät an oder auf der Basisstation und belegt somit eine bestimmte Fläche im Raum, die nicht für andere Geräte oder Gegenstände genutzt werden kann. Daher wird die Basisstation häufig in Räumen wie Badezimmern oder Abstellkammern abgestellt, so dass das Bodenbearbeitungsgerät wenig störend wirkt.

Zuvor beschriebene Bearbeitungsroboter und Systeme zur Bodenbearbeitung sind beispielsweise aus der US 5,995,884 und der US 2014/0289992 A1 bekannt.

Ein weiteres Haushaltsgerät ist eine Personenwaage, die ebenfalls typischer Weise in Badezimmern oder Abstellkammern aufgestellt werden. Oftmals sind beide Geräte direkt nebeneinander angeordnet.

Der vorliegenden Erfindung liegt daher das technische Problem zugrunde, den Platzbedarf für verschiedene Haushaltsgeräte zu verringern.

Das zuvor aufgezeigte technische Problem wird erfindungsgemäß durch einen eingangs genannten Bodenbearbeitungsroboter dadurch gelöst, dass das Gehäuse des Bodenbearbeitungsgerätes auf der Oberseite eine Standfläche für ein Tragen einer Person aufweist, dass das Bodenbearbeitungsgerät mindestens eine Wägezelle aufweist und dass die Wägezelle für ein Wiegen des Gewichts der Person geeignet ist. Dazu ist das Gehäuse des Bodenbearbeitungsgerätes vorzugsweise für eine Traglast von mindestens 100 kg geeignet.

Somit werden in überraschender Weise zwei grundsätzlich verschiedene Geräte miteinander verbunden, die an sich keine gemeinsamen Eigenschaften aufweisen. Ein Benutzer eines Bodenbearbeitungsroboters, insbesondere eines Bodenreinigungsroboters, kann dieses Gerät gleichzeitig auch für ein Wiegen des Körpergewichts nutzen. Dabei kann das Wiegen des Körpergewichts unabhängig vom Aufenthaltsort des Bodenbearbeitungsgerätes durchgeführt werden, wenn die Wiegefunktion ausschließlich in dem Bodenbearbeitungsgerät integriert ist. Natürlich kann das Bodenbearbeitungsgerät auch dann zum Wiegen des Körpergewichts genutzt werden, wenn sich das Bodenbearbeitungsgerät in oder an der Basisstation befindet. Ist die Wiegefunktion in die Basisstation integriert, wie weiter unten als weitere Lösung des technischen Problems beschrieben wird, so muss sich das Bodenbearbeitungsgerät auf der Basisstation befinden.

Zunächst wird die Erfindung in der Ausführungsform beschrieben, bei der die Wiegefunktion allein in dem Bodenbearbeitungsgerät integriert ist. Dazu weisen in bevorzugter Weise mindestens drei Auflagepunkte des Bodenbearbeitungsgerätes jeweils eine Wägezelle auf. Die drei Auflagepunkte können beispielsweise zwei Antriebsräder und eine mitlaufende Rolle sein. Steht eine Person auf dem Bodenbearbeitungsgerät, so definieren die drei Auflagepunkte eine Standfläche und die Person kann sicher auf dem Bodenbearbeitungsgerät stehen.

Sind mehr als drei Auflagepunkte vorhanden, also beispielsweise zwei Antriebsräder und mindestens zwei mitlaufende Rollen, dann weisen in weiter bevorzugter Weise alle Auflagepunkte des Bodenbearbeitungsgerätes eine Wägezelle auf. Somit ist sichergestellt, dass das gesamte Gewicht der Person gemessen wird.

In weiter vorteilhafter Weise dienen die Lagerstellen der Antriebsräder und der mitlaufenden Rollen als Angriffspunkte der Wägezellen. Somit lassen sich die Wägezellen gut in das Bodenbearbeitungsgerät integrieren.

Das oben aufgezeigte technische Problem wird auch durch ein eingangs genanntes System zur Bodenbearbeitung dadurch gelöst, dass die Basisstation mindestens eine Wägezelle aufweist und dass die mindestens eine Wägezelle mit der Basisplatte verbunden ist. Diese alternative Ausgestaltung der vorliegenden Erfindung besteht also darin, dass eine eingangs erwähnte Basisstation zusammen mit dem Bodenbearbeitungsgerät die Wiegefunktion verwirklichen.

Dadurch, dass die Basisstation eine Basisplatte zur Aufnahme aller Auflagepunkte des Bodenbearbeitungsgerätes aufweist und dass die mindestens eine Wägezelle mit der Basisplatte verbunden ist, kann immer dann, wenn das Bodenbearbeitungsgerät auf der Basisstation aufgefahren ist und sich in der Ruhe- und ggf. Aufladeposition befindet, der Bodenbearbeitungsroboter als Personenwaage benutzt werden.

Zur Bestimmung des Körpergewichts einer auf dem Bodenbearbeitungsgerät stehenden Person ist für beide erfindungsgemäßen Lösungen eine Auswerteeinheit zum Auswerten der Messsignale der mindestens einen Wägezelle vorgesehen, die vor der Messung des Gewichts einer aufstehenden Person das aktuelle Eigengewicht des Bodenbearbeitungsgerätes misst. Bei der anschließenden Auswertung der Messsignale der Wägezellen wird dann das Eigengewicht in Abzug gebracht.

Auf einer Anzeige in dem Bodenbearbeitungsgerät oder gegebenenfalls in der Basisstation wird dann das gemessene Gewicht der Person angezeigt.

Wie auch bei bekannten Personenwaagen können auch weitere Sensoren zur Bestimmung weiterer Körpereigenschaften in der Standfläche integriert sein, so zum Beispiel Elektroden zur Messung eines durch den Körper geleiteten Stroms zur Bestimmung des Fettgehaltes des Gewebes.

Die Erfindung wird im Folgenden anhand von Ausführungsbeispielen mit Bezug auf die beigefügte Zeichnung näher erläutert. In der Zeichnung zeigen
- Fig. 1: eine perspektivische Darstellung eines Bodenbearbeitungsgeräts eines Bodenbearbeitungsroboters mit einer Standfläche für eine Person,
- Fig. 2: im Querschnitt ein Bodenbearbeitungsgerät eines Bodenbearbeitungsroboters mit im Gehäuse integrierten Wägezellen und
- Fig. 3: im Querschnitt ein Bodenbearbeitungsgerät eines Bodenbearbeitungsroboters mit einer Basisstation mit integrierter Wägezelle.

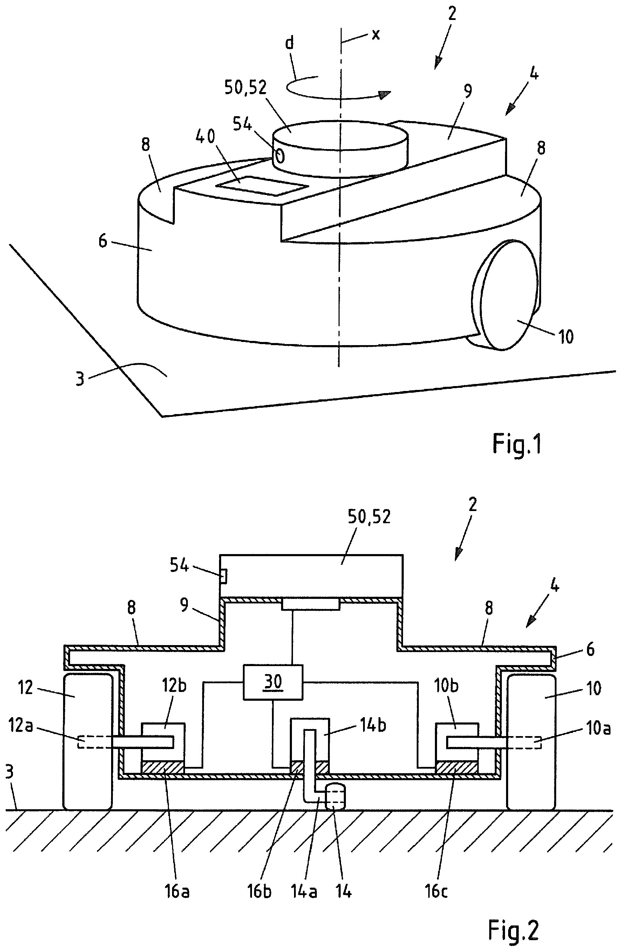

Die Fig.1 und 2 zeigen einen erfindungsgemäßen Bodenbearbeitungsroboter 2 mit einem selbsttätig auf einem Untergrund 3 verfahrbaren Bodenbearbeitungsgerät 4. Das Gehäuse 6 des Bodenbearbeitungsgerätes 4 weist auf der Oberseite eine Standfläche 8 für ein Tragen einer Person auf, die aus zwei jeweils neben einem Mittelabschnitt 9 angeordneten Teilflächen besteht. Dazu ist das Gehäuse 6 des Bodenbearbeitungsgerätes 4 für eine Traglast von mindestens 100 kg geeignet.

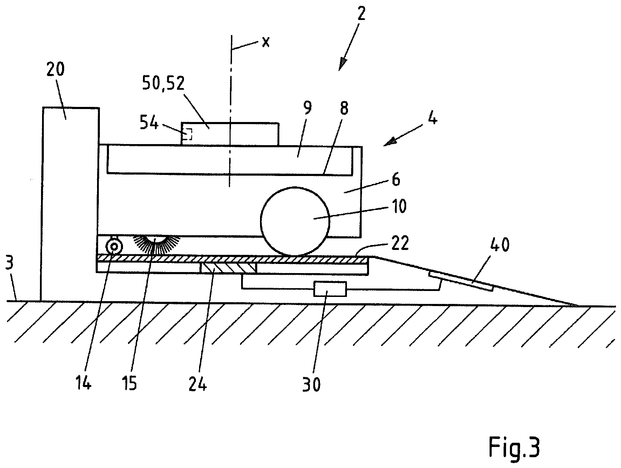

Des Weiteren sind zwei Antriebsräder 10 und 12 sowie ein Stützrad 14 vorgesehen, wobei in Fig. 1 nur ein Antriebsrad 10 wegen der perspektivischen Darstellung zu erkennen ist. In Fig. 3 ist zudem eine Bürstenwalze 15 zu erkennen, die den Saugprozess durch Aufwirbeln von Partikeln vom Boden 3 verbessert.

Wie in Fig. 2 zu erkennen ist, weisen die drei Räder 10,12 und 14 jeweils eine Achse 10a, 12a und 14a auf, die in Lagern 10b, 12b und 14b gelagert sind. Die Lager 10b, 12b und 14b sind mit dem Gehäuse 6 fest verbunden und weisen nicht im Detail ausgeführte Wägezellen 16a, 16b und 16c auf. Die Wägezellen 16a, 16b und 16c sind für ein Wiegen des Gewichts einer aufstehenden Person geeignet.

Fig. 3 zeigt ein erfindungsgemäßes System, das zum einen einen Bodenbearbeitungsroboter 2 mit einem Bodenbearbeitungsgerät 4 aufweist, das im Wesentlichen dem grundsätzlichen Aufbau des in den Fig. 1 dargestellten Bodenbearbeitungsgerät 4 entspricht. Zum anderen ist eine Basisstation 20 vorgesehen, die zumindest zum Aufladen des Akkumulators des Bodenbearbeitungsgerätes 4 dient. Die Basisstation 20 weist eine Basisplatte 22 zur Aufnahme aller Auflagepunkte, also der Räder 10, 12 und 14 des Bodenbearbeitungsgerätes 4 auf. Die Basisplatte 22 ist mit mindestens einer Wägezelle 24 verbunden. Anstelle nur einer Wägezelle 24 können auch mehr als eine Wägezelle 24 vorgesehen sein.

Wie sowohl in Fig. 2 als auch in Fig. 3 dargestellt ist, ist eine Auswerteeinheit 30 zum Auswerten der Messsignale der mindestens einen Wägezelle 16a, 16b und 16c bzw. 24 vorgesehen. Vor der Messung des Gewichts einer aufstehenden Person misst die Auswerteeinheit 30 das aktuelle Eigengewicht des Bodenbearbeitungsgerätes 4, was durch einen geeigneten Startprozess realisiert werden kann. Auf einer in dem Bodenbearbeitungsgerät 4 oder in der Basisstation 20 angeordneten Anzeige 40 wird dann zumindest das gemessene Gewicht angezeigt.

Das dargestellte Bodenbearbeitungsgerät 4 weist zusätzlich einen Aufsatz 50 mit einer Sensorik 52 zum Erfassen der räumlichen Struktur um das Bodenbearbeitungsgerätes herum auf. Dazu ist vorzugsweise ein Lasersensor 54 vorgesehen, der die Umgebung des Bodenbearbeitungsgerätes scannt. Dazu ist der Aufsatz 50 um eine vertikale Achse x drehbar, wie mit dem Pfeil d in Fig. 1 angedeutet ist.

## Patentansprüche

1. Bodenbearbeitungsroboter
- mit einem selbsttätig verfahrbaren Bodenbearbeitungsgerät (4) und
- mit einem Gehäuse (6),
**dadurch gekennzeichnet,**
- **dass** das Gehäuse (6) des Bodenbearbeitungsgerätes (4) auf der Oberseite eine Standfläche (8) für ein Tragen einer Person aufweist,
- **dass** das Bodenbearbeitungsgerät (4) mindestens eine Wägezelle (16) aufweist und
- **dass** die Wägezelle (16) für ein Wiegen des Gewichts der Person geeignet ist.

2. Bodenbearbeitungsroboter nach Anspruch 1,
**dadurch gekennzeichnet,**
**dass** das Gehäuse (6) des Bodenbearbeitungsgerätes (4) für eine Traglast von mindestens 100 kg geeignet ist.

3. Bodenbearbeitungsroboter nach Anspruch 1 oder 2,
**dadurch gekennzeichnet,**
**dass** mindestens drei Auflagepunkte (10, 12, 14) des Bodenbearbeitungsgerätes (4) jeweils eine Wägezelle (16a, 16b, 16c) aufweisen.

4. Bodenbearbeitungsroboter nach Anspruch 3,
**dadurch gekennzeichnet,**
**dass** die Lagerstellen (10b,12b, 14b) der Antriebsräder (10, 12) und ggf. mitlaufender Rollen (14) als Angriffspunkte der Wägezellen (16a, 16b, 16c) dienen.

5. Bodenbearbeitungsroboter nach einem der Ansprüche 1 bis 4,
**dadurch gekennzeichnet,**
**dass** eine Auswerteeinheit (30) zum Auswerten der Messsignale der mindestens einen Wägezelle (16a, 16b, 16c) vorgesehen ist.

6. Bodenbearbeitungsroboter nach Anspruch 5,
**dadurch gekennzeichnet,**
**dass** die Auswerteeinheit (30) vor der Messung des Gewichts einer aufstehenden Person das aktuelle Eigengewicht des Bodenbearbeitungsgerätes (4) misst.

7. Bodenbearbeitungsroboter nach Anspruch 5 oder 6,
**dadurch gekennzeichnet,**
**dass** eine Anzeige (30) in dem Bodenbearbeitungsgerät (4) angeordnet ist.

8. System zur Bodenbearbeitung
- mit einem ein selbsttätig verfahrbares Bodenbearbeitungsgerät (4), ein Gehäuse (6) und einen Akkumulator aufweisenden Bodenbearbeitungsroboter (2) und
- mit einer Basisstation (20) zumindest zum Aufladen des Akkumulators des Bodenbearbeitungsgerätes (4),
- wobei das Gehäuse (6) des Bodenbearbeitungsgerätes (4) auf der Oberseite eine Standfläche (8) für ein Tragen einer Person aufweist und
- wobei die Basisstation (20) eine Basisplatte (22) zur Aufnahme aller Auflagepunkte (10, 12, 14) des Bodenbearbeitungsgerätes (4) aufweist **dadurch gekennzeichnet,**
- **dass** die Basisstation (20) mindestens eine Wägezelle (24) aufweist und
- **dass** die mindestens eine Wägezelle (24) mit der Basisplatte (22) verbunden ist.

9. System nach Anspruch 8,
**dadurch gekennzeichnet,**
**dass** eine Auswerteeinheit (30) zum Auswerten der Messsignale der mindestens einen Wägezelle (24) vorgesehen ist.

10. System nach Anspruch 9,
**dadurch gekennzeichnet,**
**dass** die Auswerteeinheit (30) vor der Messung des Gewichts einer aufstehenden Person das aktuelle Eigengewicht des Bodenbearbeitungsgerätes (4) misst.

11. System nach Anspruch 9 oder 10,
**dadurch gekennzeichnet,**
**dass** eine Anzeige (30) in dem Bodenbearbeitungsgerät (4) oder in der Basisstation (20) angeordnet ist.

## Claims

1. Floor treatment robot
- having an autonomously movable floor treatment appliance (4) and
- having a housing (6),
**characterised in that**
- the housing (6) of the floor treatment appliance (4) has a standing area (8) on the top side for supporting a person,
- the floor treatment appliance (4) has at least one load cell (16), and
- the load cell (16) is suitable for measuring the weight of the person.

2. Floor treatment robot according to Claim 1,
**characterised in that**
the housing (6) of the floor treatment appliance (4) is suitable for a load of at least 100 kg.

3. Floor treatment robot according to Claim 1 or 2,
**characterised in that**
at least three support points (10, 12, 14) of the floor treatment appliance (4) each have a load cell (16a, 16b, 16c).

4. Floor treatment robot according to Claim 3,
**characterised in that**
the bearing points (10b, 12b, 14b) of the drive wheels (10, 12) and where applicable of freely running castors (14) act as effective points of the load cells (16a, 16b, 16c).

5. Floor treatment robot according to any one of Claims 1 to 4,
**characterised in that**
an evaluation unit (30) is provided for evaluating the measurement signals of the at least one load cell (16a, 16b, 16c).

6. Floor treatment robot according to Claim 5,
**characterised in that**
the evaluation unit (30) measures the current dead weight of the floor treatment appliance (4) before the weight of a person standing on it is measured.

7. Floor treatment robot according to Claim 5 or 6,
**characterised in that**
a display (30) is arranged in the floor treatment appliance (4).

8. System for treatment the floor
- with a floor treatment robot (2) including an autonomously movable floor treatment appliance (4), a housing (6) and a battery and
- with a base station (20) for at least charging the battery of the floor treatment appliance (4),
- wherein the housing (6) of the floor treatment appliance (4) has a standing area (8) on the top side for supporting a person and
- wherein the base station (20) has a base plate (22) for receiving all the support points (10,12,14) of the floor treatment appliance (4),
**characterised in that**,
- the base station (20) has at least one load cell (24) and
- the at least one load cell (24) is connected to the base plate (22).

9. System according to Claim 8,
**characterised in that**,
an evaluation unit (30) is provided for evaluating the measurement signals of the at least one load cell (24).

10. System according to Claim 9,
**characterised in that**,
the evaluation unit (30) measures the current dead weight of the floor treatment appliance (4) before the weight of a person standing on it is measured.

11. System according to Claim 9 or 10,
**characterised in that**,
a display (30) is arranged in the floor treatment appliance (4) or in the base station (20).

## Revendications

1. Robot de traitement de sol
- comprenant un appareil de traitement de sol (4) à déplacement automatique et
- comprenant un carter (6),
**caractérisé**
- **en ce que** le carter (6) de l'appareil de traitement de sol (4) présente, sur la partie supérieure, une surface de support (8) permettant de porter une personne,
- **en ce que** l'appareil de traitement de sol (4) présente au moins une cellule de pesée (16) et
- **en ce que** la cellule de pesée (16) est appropriée pour indiquer le poids de la personne.

2. Robot de traitement de sol selon la revendication 1, **caractérisé**
**en ce que** le carter (6) de l'appareil de traitement de sol (4) est approprié pour une charge au moins de 100 kg.

3. Robot de traitement de sol selon la revendication 1 ou 2,
**caractérisé**
**en ce qu'**au moins trois points d'appui (10, 12, 14) de l'appareil de traitement de sol (4) présentent à chaque fois une cellule de pesée (16a, 16b, 16c).

4. Robot de traitement de sol selon la revendication 3, **caractérisé**
**en ce que** les points d'appui (10b, 12b, 14b) des roues d'entraînement (10, 12) et éventuellement des rouleaux entraînés (14) servent de points d'application des cellules de pesée (16a, 16b, 16c).

5. Robot de traitement de sol selon l'une quelconque des revendications 1 à 4,
**caractérisé**
**en ce qu'**il est prévu une unité d'analyse (30) servant à l'analyse des signaux de mesure de la cellule de pesée (16a, 16b, 16c) au moins au nombre de un.

6. Robot de traitement de sol selon la revendication 5, **caractérisé**
**en ce que** l'unité d'analyse (30), avant de mesurer le poids d'une personne se tenant debout, mesure le poids propre réel de l'appareil de traitement de sol (4).

7. Robot de traitement de sol selon la revendication 5 ou 6,
**caractérisé**
**en ce qu'**un affichage (30) est disposé dans l'appareil de traitement de sol (4).

8. Système de traitement de sol
- comprenant un appareil de traitement de sol (4) à déplacement automatique, un carter (6) et un robot de traitement de sol (2) présentant un accumulateur et
- comprenant une station de base (20) servant au moins à la recharge de l'accumulateur de l'appareil de traitement de sol (4),
- où le carter (6) de l'appareil de traitement de sol (4) présente, sur la partie supérieure, une surface de support (8) permettant de porter une personne et
- où la station de base (20) présente une plaque de base (22) servant à recevoir tous les points d'appui (10, 12, 14) de l'appareil de traitement de sol (4),
**caractérisé**
- **en ce que** la station de base (20) présente au moins une cellule de pesée (24) et
- **en ce que** la cellule de pesée (24) au moins au nombre de un est assemblée avec la plaque de base (22).

9. Système selon la revendication 8,
**caractérisé**
**en ce qu'**il est prévu une unité d'analyse (30) servant à l'analyse des signaux de mesure de la cellule de pesée (24) au moins au nombre de un.

10. Système selon la revendication 9,
**caractérisé**
**en ce que** l'unité d'analyse (30) mesure, avant de mesurer le poids d'une personne se tenant debout, le poids propre réel de l'appareil de traitement de sol (4).

11. Système selon la revendication 9 ou 10,
**caractérisé**
**en ce qu'**un affichage (30) est disposé dans l'appareil de traitement de sol (4) ou dans la station de base (20).
